# EUROPEAN PATENT APPLICATION

(11) **EP 4 796 591 A1**
(43) Date of publication of application: **26.08.2026**
(21) Application number: 24888082.5
(22) Date of filing: 08.11.2024
(51) Int. Cl.: C08L 27/18, B29D 23/00

(54) **HEAT-SHRINKABLE TUBE AND PREPARATION METHOD THEREFOR**

(30) Priority: 10.11.2023 CN 202311514761
(71) Applicant: Accupath Group Co., Ltd., Jiaxing, Zhejiang 314051 (CN)
(72) Inventor: DENG, Zhihua, Jiaxing, Zhejiang 314051 (CN); DAI, Lihao, Jiaxing, Zhejiang 314051 (CN); ZHANG, Qiu, Jiaxing, Zhejiang 314051 (CN); LI, Zhaomin, Jiaxing, Zhejiang 314051 (CN)
(74) Representative: Murgitroyd & Company
(86) International application number: PCT/CN2024/130807
(87) International publication number: WO 2025/098471

(57) **Abstract**

The present application relates to a heat-shrinkable tube and a preparation method therefor. The components of the heat-shrinkable tube comprise first fluororesin and second fluororesin, wherein each of the first fluororesin and the second fluororesin comprises at least two comonomers; and the first fluororesin and the second fluororesin contain at least one identical comonomer, and the comonomers contained in the first fluororesin are not exactly the same as the comonomers contained in the second fluororesin. The absolute value of the difference between the notch deviation rate of the heat-shrinkable tube at a notch starting position and the crack deviation rate of a tear section of the heat-shrinkable tube at the notch position is less than or equal to 15%; and at two different notch positions, when the difference between the notch deviation rates of the heat-shrinkable tube at two notch starting positions is 39-41%, the difference between the crack deviation rates of tear sections of the heat-shrinkable tube at the two notch positions is 30-50%. The heat-shrinkable tube can be easily torn at a plurality of notch positions, and tear lines at the plurality of notch positions are substantially parallel to the axial direction of the tube, such that the heat-shrinkable tube can be suitable for requirements in various usage scenarios.

## Description

### RELATED APPLICATIONS

This application claims priority to Chinese Patent Application No. 2023115147614, entitled "Heat-Shrinkable Tube and Preparation Method Therefor", filed with China National Intellectual Property Administration on November 10, 2023, the entire content of which is incorporated herein by reference.

### TECHNICAL FIELD

The present application relates to the field of medical instrument technologies, and in particular, to a heat-shrinkable tube and a preparation method therefor.

### BACKGROUND

Heat-shrinkable tubes have been widely used in the fields of industry, electronics, medical treatment, or the like, due to their excellent temperature resistance, corrosion resistance, insulativity, surface smoothness, or the like. In some application scenarios where it is not desired to increase the external dimension of a covered member by the wall thickness of the heat-shrinkable tube, or to change the surface material or performance of the covered member by the heat-shrinkable tube, after processes involving heating, soaking, flushing, powering, or the like, are completed, when the covered member is no longer required to be protected by the heat-shrinkable tube, the heat-shrinkable tube is required to be peeled off from the surface of the covered member, and in this case, the heat-shrinkable tube is required to have excellent tearability.

The specific method for peeling off the heat-shrinkable tube includes: cutting one end of the heat-shrinkable tube by a sharp tool such as scissors and a blade to form two notches with lengths of 5-10mm in the axial direction of the tube, so as to place hands or clamps, and then pinching and pulling the parts of the tube on the two sides of the notches towards two sides with the hands or the clamps, so as to tear the tube along the axial direction.

For an ideal heat-shrinkable tube easy to tear, no matter where the notch is formed at one end of the tube, the tube can be continuously torn from the notch along the axial direction, and a tear line extends along a direction parallel to the axial direction, such that the heat-shrinkable tube can be suitable for tear requirements under any working condition.

However, in the heat-shrinkable tube in the prior art, the tear line deviates from the axial direction of the tube regardless of the position of the notch, which results in the problem that after a part (for example, 20mm) is torn axially, the heat-shrinkable tube is broken into two parts and can not be torn continuously along the axial length direction, such that a part of the heat-shrinkable tube is still not torn; under special working conditions such as the condition that only a part (for example, 10%) of the heat-shrinkable tube is exposed in the radial direction, and the rest is blocked, it is desired to peel the heat-shrinkable tube from the exposed part with a clamp, which cannot be realized.

In order to solve the above problems, a method in the prior art includes: adopting a cutting tool with a blade, embedding the blade into the heat-shrinkable tube, and moving the blade relative to the tube along the axial direction (i.e., the length direction) of the heat-shrinkable tube, thereby forming a cutting mark on the surface of the heat-shrinkable tube. In this way, the heat-shrinkable tube can be easily torn along the cutting mark and peeled off from the surface of the covered member. This solution has the disadvantage that, due to tolerances in the wall thickness of the heat-shrinkable tube and the external dimension of the covered member, the position of the blade is required to be frequently adjusted to accommodate such tolerances when the cutting tool is used. Otherwise, if the position of the blade is kept unchanged, when different members covered with heat-shrinkable tubes in the same batch are processed, the depths of embedding of the blade into the heat-shrinkable tubes are different, and there may be the problem that the embedding depth of the blade is excessively small, such that the cutting mark formed by the blade is excessively shallow, and the heat-shrinkable tube cannot be easily torn; and there may also be the problem that the embedding depth of the blade is excessively large and the blade scratches or damages the outer surface of the covered member. In order to solve the problem, continuous investment is required to optimize the cutting tool, effort is required to be put to frequently adjust the position of the blade in the cutting tool, but the requirement of the field for the heat-shrinkable tube still cannot be met.

### SUMMARY

Based on this, it is necessary to provide a heat-shrinkable tube with tearability and a preparation method therefor, in which on the one hand, the heat-shrinkable tube can have tearability at a plurality of notch positions; and on the other hand, tear lines of the heat-shrinkable tube at the plurality of notch positions are substantially parallel to an axial direction of the tube.

The present application is implemented by the following technical solution.

In an aspect of the present application, there is provided a heat-shrinkable tube, wherein components of the heat-shrinkable tube include first fluororesin and second fluororesin, each of the first fluororesin and the second fluororesin comprises at least two comonomers, the first fluororesin and the second fluororesin contain at least one identical comonomer, and the comonomers contained in the first fluororesin are not exactly the same as the comonomers contained in the second fluororesin;
an absolute value of a difference between a notch deviation rate of the heat-shrinkable tube at a notch starting position and a crack deviation rate of a tear section of the heat-shrinkable tube at the notch position is less than or equal to 15%; and
at two different notch positions, when a difference between notch deviation rates of the heat-shrinkable tube at two notch starting positions is 39-41%, a difference between crack deviation rates of tear sections of the heat-shrinkable tube at the two notch positions is 30-50%.

The heat-shrinkable tube can have tearability at a plurality of notch positions even at any notch position, that is, the notch deviation rate is 0-50%. The notch deviation rate is 0% when a notch connecting line is coincided with a midline, that is, the heat-shrinkable tube is torn in half; tearing is not limited to halving, and a tear position of the heat-shrinkable tube can be changed along with the notch position, for example, a tear ratio may be 2/8, 3/7, or the like, such that the notch position of the heat-shrinkable tube can be flexibly selected according to actual working conditions, and the heat-shrinkable tube can be suitable for requirements in various usage scenarios. The heat-shrinkable tube torn at different notches is torn substantially in a direction parallel to an axial direction at the tear section. Therefore, the requirement of at least two different crack deviation rates can be met, the requirements in various usage scenarios can be met, and the crack deviation rate facilitating operations can be selected as required for tearing.

In any embodiment of the present application, under the same notch position, three cross sections perpendicular to the axial direction are taken at the tear section of the heat-shrinkable tube, an axial distance between any two adjacent cross sections of the three cross sections is more than or equal to 95mm, an absolute value of a difference between an average value of crack deviation rates of the heat-shrinkable tube on the three cross sections and the notch deviation rate of the heat-shrinkable tube at the notch starting position is less than or equal to 15%, and a difference between a maximum value and a minimum value of the crack deviation rates on the three cross sections is less than or equal to 5%.

In any embodiment of the present application, the crack deviation rate of the tear section refers to a position deviation degree of a fracture connecting line on any cross section of the tear section of the heat-shrinkable tube perpendicular to the axial direction relative to a midline; the fracture connecting line refers to a connecting line of two midpoints of two fracture marks on the cross section, and the midline refers to a straight line which passes through a center point of the cross section and is parallel to the fracture connecting line;
the crack deviation rate of the tear section is calculated by (1-4L₁L₂/(d₁+D₁)²)×100%, and ranges from 0% to 50%;
L₁ denotes a length of the fracture connecting line;
L₂ denotes a length of a connecting line of two midpoints of two line segments respectively formed by intersecting a perpendicular bisector of the fracture connecting line with two opposite side walls of the heat-shrinkable tube in the cross section;
d₁ denotes an initial inner diameter of the heat-shrinkable tube; and
D₁ denotes an initial outer diameter of the heat-shrinkable tube.

In any embodiment of the present application, the notch deviation rate at the notch starting position refers to a position deviation degree of the notch connecting line on a cross section of the notch starting position of the heat-shrinkable tube perpendicular to the axial direction relative to the midline; the notch connecting line refers to a connecting line of two midpoints of two cutting marks, and the midline refers to a straight line which passes through a center point of the cross section and is parallel to the notch connecting line;
the notch deviation rate at the notch starting position is calculated by (1-4l₁l₂/(d₁+D₁)²)×100%, and ranges from 0% to 50%;
l₁ denotes a length of the notch connecting line;
l₂ denotes a length of a connecting line of two midpoints of two line segments respectively formed by intersecting a perpendicular bisector of the notch connecting line with the two opposite side walls of the heat-shrinkable tube in the cross section;
d₁ denotes the initial inner diameter of the heat-shrinkable tube; and
D₁ denotes the initial outer diameter of the heat-shrinkable tube.

In any embodiment of the present application, the heat-shrinkable tube has at least one of the following features:
(1) a shrinkage ratio a of the heat-shrinkable tube is more than or equal to 1.6, and optionally, a is 1.6-2.6, wherein a=d₁/d₂, and a unit is 1; d₁ is the initial inner diameter of the heat-shrinkable tube, and d₂ is an inner diameter of the heat-shrinkable tube after heat shrinkage under the condition of heating at 210°C for 10min; and
(2) a tearing force value b of the heat-shrinkable tube is less than 13.5N/mm, wherein b=Fₘₐₓ/d₃, Fₘₐₓ is a maximum tearing force value during tearing of the heat-shrinkable tube at a speed of 200mm/min, and d₃ is a wall thickness of the heat-shrinkable tube.

In any embodiment of the present application, the first fluororesin and the second fluororesin have the following features:
viscosities of the first fluororesin and the second fluororesin in a molten state are x and y respectively; a measured value of a viscosity after melt blending of the first fluororesin and the second fluororesin is z, and a theoretical value thereof is z₀; z, z₀, x and y have a same unit; mass contents of the first fluororesin and the second fluororesin before blending in a total amount of the first fluororesin and the second fluororesin are m and n respectively, m+n=1, both m and n are not 0, and z₀=mx+ny;
$1 > y / x > 0.1 ; 0.5 < z / {z}_{0} < 0.9 , or 1.2 < {z / z}_{0} < 3.0 .$

In any embodiment of the present application, 1>y/x>0.5, and 0.7<z/z₀<0.9.

In any embodiment of the present application, the comonomers of each of the first fluororesin and the second fluororesin independently include at least two of ethylene, vinylidene fluoride, tetrafluoroethylene, perfluoroalkoxy-substituted tetrafluoroethylene, and hexafluoropropylene;
optionally, the first fluororesin is a tetrafluoroethylene-hexafluoropropylene copolymer, and the second fluororesin is an ethylene-tetrafluoroethylene copolymer;
optionally, the first fluororesin is a tetrafluoroethylene-hexafluoropropylene-perfluoroalkoxy-substituted tetrafluoroethylene copolymer, and the second fluororesin is a tetrafluoroethylene-hexafluoropropylene-vinylidene fluoride copolymer.

In another aspect of the present application, there is provided a preparation method for a heat-shrinkable tube, including the following steps:
performing melt blending on raw materials, and performing extrusion molding at a traction speed of 0.25-10m/min to obtain a fluoroplastic tube, wherein the raw materials include first fluororesin and second fluororesin, each of the first fluororesin and the second fluororesin comprises at least two comonomers, the first fluororesin and the second fluororesin contain at least one identical comonomer, and the comonomers contained in the first fluororesin are not exactly the same as the comonomers contained in the second fluororesin; viscosities of the first fluororesin and the second fluororesin in a molten state are x and y respectively, a measured viscosity after melt blending of the first fluororesin and the second fluororesin is z, a theoretical viscosity is z₀, x, y, z and z₀ have a same unit, z₀=mx+ny, 1>y/x>0.1, 0.5<z/z₀<0.9 or 1.2<z/z₀<3.0, mass contents of the first fluororesin and the second fluororesin before blending in a total amount of the first fluororesin and the second fluororesin are m and n respectively, m+n=1, and both m and n are not 0; and
heating the fluoroplastic tube to be in a high elastic state, radially expanding the fluoroplastic tube, and then performing cooling and molding to obtain the heat-shrinkable tube.

In any embodiment of the present application, 1>y/x>0.5, and 0.7<z/z₀<0.9.

In any embodiment of the present application, the extrusion molding step has at least one of the following features:
(1) the traction speed of the extrusion molding step is 1-4m/min;
(2) a temperature of the melt blending is 270-380°C, and a shear rate thereof is 1-10s⁻¹; and
(3) in the extrusion molding step, an inner diameter of an adopted extrusion die is d₄, an outer diameter of the prepared fluoroplastic tube is d₅, and d₄/d₅ is controlled to be 1.5-10 or 2-8.

In any embodiment of the present application, after the extrusion molding step, the preparation method further includes the step of cooling the fluoroplastic tube obtained by extrusion molding to be at a temperature below a glass-transition temperature, in which a temperature lowering rate is 6-300°C/s, and optionally 10-150°C/s.

In any embodiment of the present application, the radial expansion step has at least one of the following features:
(1) a traction force is applied while radial expansion is performed, a traction speed in the radial expansion step is lower than that in the extrusion molding step, and optionally, the traction speed in the radial expansion step is 0.05-8.5m/min; and
(2) an expansion ratio c of the radial expansion is calculated by d₁/d₆ and is 1.65-2.75, d₁ is the inner diameter of the prepared heat-shrinkable tube, and d₆ is an inner diameter of the heat-shrinkable tube before the radial expansion and after the extrusion molding.

### BRIEF DESCRIPTION OF THE DRAWINGS

In order to illustrate the technical solutions in the embodiments of the present application or the prior art more clearly, the drawings required for describing the embodiments or the prior art will be described briefly. Apparently, the following described drawings are merely for the embodiments of the present application, and other drawings can be derived from the disclosed drawings by those of ordinary skill in the art without any creative effort.
FIG. 1 is a schematic diagram of a cross section of a heat-shrinkable tube according to an embodiment at a notch starting position;
FIG. 2 is a schematic diagram of a cross section of a heat-shrinkable tube according to an embodiment at a tear section after tearing and before separation;
FIG. 3 is a graph of a viscosity vs. a temperature of fluororesin before blending and after blending in Example 1;
FIG. 4 is a graph of a viscosity vs. a temperature of fluororesin before blending and after blending in Example 5;
FIG. 5 is a graph of a viscosity vs. a temperature of fluororesin before blending and after blending in Comparative Example 1; and
FIG. 6 is a graph of a viscosity vs. a temperature of fluororesin before blending and after blending in Comparative Example 2.

### DETAILED DESCRIPTION

The technical solutions in the embodiments of the present application are clearly and completely described with reference to the accompanying drawings in the embodiments of the present application, and apparently, the described embodiments are not all but only a part of the embodiments of the present application. All other embodiments obtained by a person of ordinary skill in the art based on the embodiments of the present application without creative efforts shall fall within the protection scope of the present application.

To facilitate an understanding of the present application, the present application is described more fully hereinafter with reference to the accompanying drawings. Preferred embodiments of the present application are shown in the drawings. However, the present application may be implemented in many different forms and is not limited to the embodiments set forth herein. It should be understood that these embodiments are provided to make an understanding of the disclosure of the present application more thorough and complete.

Unless defined otherwise, all technical and scientific terms used herein have the same meanings as are commonly understood by those skilled in the art. The terms used herein in the specification of the present application are for the purpose of describing specific embodiments only but not intended to limit the present application. The term "and/or" used herein includes any and all combinations of one or more related listed items.

In the description of the present application, it should be understood that the terms such as "first" and "second" are used herein for purposes of description and are not intended to indicate or imply relative importance or implicitly indicate the quantity of the technical features indicated. Thus, the feature defined with "first" and "second" may explicitly or implicitly include at least one of these features. In the description of the present application, "a plurality of" means two or more, unless otherwise clearly and specifically defined.

The "ranges" disclosed herein are defined in terms of lower limits and upper limits, and a given range is defined by selecting one lower limit and one upper limit, which define the boundaries of the particular range. The ranges defined in this way may or may not include end values and may be arbitrarily combined, that is, any lower limit may be combined with any upper limit to form one range.

A traditional preparation method for a heat-shrinkable tube includes: heating a thermoplastic tube to be at a temperature above a glass-transition temperature and below a melting point to realize a high elastic state, applying a pressure difference between the interior and the exterior of the tube to radially expand the tube, rapidly cooling the tube in the state of maintaining radial expansion, so as to cause the tube to get into a glass state and store stress caused by expansion, and finishing preparation. In use, the heat-shrinkable tube is heated, a material of the heat-shrinkable tube is heated to get into a high elastic state, the stress stored previously is released, the heat-shrinkable tube is radially shrunk, and the heat-shrinkable tube is tightly wrapped on a member required to be protected through the radial shrinkage of the heat-shrinkable tube.

Tearability of the heat-shrinkable tube herein means that two openings with lengths of 5-10mm are cut by a sharp tool such as scissors and a blade in one end of the heat-shrinkable tube along an axial direction of the tube, and then, two parts of the tube on two sides of the notches are pinched and pulled towards two sides with hands or clamps, the tube can be continuously torn into two parts along the axial direction, and a continuous tearing length is more than 1 meter (not including the lengths of the notches). In the field of medical instruments, lengths of commonly-used tube products are generally within 3 meters, for example, from 1 meter to 3 meters, and the heat-shrinkable tube with tearability according to the present application can be easily torn along the axial direction. In addition, the continuous tearing length of the heat-shrinkable tube according to the present application is not limited to the continuous tearing lengths of conventional products in the field of medical instruments.

It should be noted that the tearability of the heat-shrinkable tube does not change greatly before and after heat shrinkage of the heat-shrinkable tube. Herein, the heat-shrinkable tube has tearability before and after heat shrinkage. A shrinkage ratio of the heat-shrinkable tube herein means a ratio of an inner diameter of the heat-shrinkable tube before heat shrinkage to an inner diameter after heat shrinkage. The shrinkage ratio a is calculated by d₁/d₂ and has a unit of 1; d₁ is the inner diameter of the heat-shrinkable tube before heat shrinkage (i.e., an initial inner diameter of the heat-shrinkable tube), and d₂ is the inner diameter of the heat-shrinkable tube after heat shrinkage under the condition of heating at 210°C for 10min.

A tearing force value b of the heat-shrinkable tube herein refers to a ratio of a maximum tearing force value Fₘₐₓ during tearing of the heat-shrinkable tube at a speed of 200mm/min to a wall thickness d₃ of the heat-shrinkable tube (i.e., an initial wall thickness of the heat-shrinkable tube), and has a unit of N/mm.

The present application provides a heat-shrinkable tube and a preparation method therefor. The prepared heat-shrinkable tube is described in detail below with reference to the preparation method.

An embodiment of the present application provides a heat-shrinkable tube, wherein components of the heat-shrinkable tube include first fluororesin and second fluororesin, each of the first fluororesin and the second fluororesin comprises at least two comonomers, the first fluororesin and the second fluororesin contain at least one identical comonomer, and the comonomers contained in the first fluororesin are not exactly the same as the comonomers contained in the second fluororesin.

An absolute value of a difference between a notch deviation rate of the heat-shrinkable tube at a notch starting position and a crack deviation rate of a tear section of the heat-shrinkable tube at the notch position is less than or equal to 15%. This indicates that the notch starting position of the heat-shrinkable tube and a position of the tear section corresponding to the notch position do not differ greatly, that is, a tear line of the heat-shrinkable tube at the notch position is basically parallel to an axial direction of the tube.

At two different notch positions, when a difference between notch deviation rates of the heat-shrinkable tube at two notch starting positions is 39-41%, a difference between crack deviation rates of tear sections of the heat-shrinkable tube at the two notch positions is 30-50%. This indicates that the heat-shrinkable tube can have tearability at multiple notch positions, and since the notch positions are arbitrary, the two torn parts can ultimately have any weight ratio.

The "notch starting positions" refer to two starting positions cut by a sharp tool such as scissors and a blade in one end of the tube along the axial direction of the tube before tearing, and the two starting positions are opening positions for facilitating force application for subsequent tearing.

The notch deviation rate at the notch starting position refers to a position deviation degree of the notch connecting line on a cross section of the notch starting position of the heat-shrinkable tube perpendicular to the axial direction relative to a midline; the notch connecting line refers to a connecting line of two midpoints of two cutting marks, and the midline refers to a straight line which passes through a center point of the cross section and is parallel to the notch connecting line. Generally, the heat-shrinkable tube is a round tube, and a center point thereof is a circle center.

A calculation formula of the notch deviation rate of the notch starting position is as follows:
notch deviation rate of notch starting position=(1-4l₁l₂/(d₁+D₁)²)×100%, which is 0-50%;
l₁ denotes a length of the notch connecting line;
l₂ denotes a length of a connecting line of two midpoints of two line segments respectively formed by intersecting a perpendicular bisector of the notch connecting line with two opposite side walls of the heat-shrinkable tube in the cross section;
d₁ denotes an inner diameter of the heat-shrinkable tube; and
D₁ denotes an outer diameter of the heat-shrinkable tube.

The cross section of the notch starting position perpendicular to the axial direction means a cross section in the notch starting position perpendicular to the axial direction, i.e., a cross section of the notch starting position.

The crack deviation rate of the tear section refers to a position deviation degree of a fracture connecting line on any cross section of the tear section of the heat-shrinkable tube perpendicular to the axial direction relative to a midline; the fracture connecting line refers to a connecting line of two midpoints of two fracture marks on the cross section, and the midline refers to a straight line which passes through a center point of the cross section and is parallel to the fracture connecting line.

The crack deviation rate of the tear section is calculated by (1-4L₁L₂/(d₁+D₁)²)×100%, and ranges from 0% to 50%;
L₁ denotes a length of the fracture connecting line;
L₂ denotes a length of a connecting line of two midpoints of two line segments respectively formed by intersecting a perpendicular bisector of the fracture connecting line with the two opposite side walls of the heat-shrinkable tube in the cross section;
d₁ denotes the initial inner diameter of the heat-shrinkable tube, i.e., an inner diameter of the heat-shrinkable tube before tearing; and
D₁ denotes the initial outer diameter of the heat-shrinkable tube, i.e., an outer diameter of the heat-shrinkable tube before tearing.

The tear section has a length from a notch resulting from tearing. Any cross section of the tear section perpendicular to the axial direction means a cross section in the tear section perpendicular to the axial direction, i.e., a cross section of the tear section. A "fracture" refers specifically to a fracture surface resulting from tearing. The two fracture marks on the cross section are equivalent to an intersection line formed by the cross section and the fracture surface.

The item "an absolute value of a difference between a notch deviation rate of the heat-shrinkable tube at a notch starting position and a crack deviation rate of a tear section of the heat-shrinkable tube at the notch position is less than or equal to 15%" means that one heat-shrinkable tube is taken, two points are arbitrarily selected at one end of the heat-shrinkable tube as the notch starting positions, the notch deviation rate of the notch starting position is correspondingly generated, the heat-shrinkable tube is torn along the notch, the crack deviation rate of the tear section is generated, and the absolute value of the difference between the crack deviation rate at any length of the tear section and the notch deviation rate is less than or equal to 15%, which means that tearing is in a direction substantially parallel to the axial direction when the heat-shrinkable tube is torn from any notch.

In some examples, the absolute value of the difference between the notch deviation rate of the heat-shrinkable tube at the notch starting position and the crack deviation rate of the tear section of the heat-shrinkable tube at the notch position is 0-15%, further 0-10%, and further 0-5%.

It can be appreciated that the notch deviation rate of the heat-shrinkable tube at the notch starting position may be greater than or may be less than or equal to the crack deviation rate of the tear section of the heat-shrinkable tube at the notch position.

Since the heat-shrinkable tube cannot be re-torn in the above manner to calculate the deviation rate after being torn, the item "at two different notch positions, when a difference between notch deviation rates of the heat-shrinkable tube at two notch starting positions is 39-41% (i.e., about 40%), a difference between crack deviation rates of tear sections of the heat-shrinkable tube at the two notch positions is 30-50%" means that two identical heat-shrinkable tubes are taken, and the phase "at two different notch positions" means that cutting is performed at different positions. For example, the two notches of one of the heat-shrinkable tubes are substantially located at the midline (for example, the notch deviation rate is 1%), and the two notches of the other heat-shrinkable tube approximately divide an end surface of the heat-shrinkable tube at a ratio of 2/8 (for example, the notch deviation rate is 40%). It can be understood that, since 2 starting positions are correspondingly formed in the heat-shrinkable tube by one cutting operation, cutting at different positions means that at least one of the 2 starting positions is different for cutting at different positions, which specifically may mean that one position is different or two positions are different. In this case, the two heat-shrinkable tubes are respectively torn from the two notch positions to generate two groups of tear lines corresponding to two crack deviation rates respectively. In the present application, the heat-shrinkable tube having a notch deviation rate of 40% has a large crack deviation rate (for example, 36%), and the heat-shrinkable tube having a notch deviation rate of 1% has a small crack deviation rate (for example, 4%); and the difference between the crack deviation rates of the two heat-shrinkable tubes is 30-50%, for example 32% in the above example.

Therefore, the heat-shrinkable tube can have tearability at a plurality of notch positions even at any notch position, that is, the notch deviation rate is 0-50%. The notch deviation rate is 0% when the notch connecting line is coincided with the midline, that is, the heat-shrinkable tube is torn in half. A tear position of the heat-shrinkable tube can be changed along with the notch position, for example, a tear ratio may be 2/8, 3/7, or the like, such that the notch position of the heat-shrinkable tube can be flexibly selected according to actual working conditions, and the heat-shrinkable tube can be suitable for requirements in various usage scenarios. The heat-shrinkable tube torn at different notches is torn substantially in the direction parallel to the axial direction at the tear section. Therefore, the requirement of at least two different crack deviation rates can be met, the requirements in various usage scenarios can be met, and the crack deviation rate facilitating operations can be selected as required for tearing.

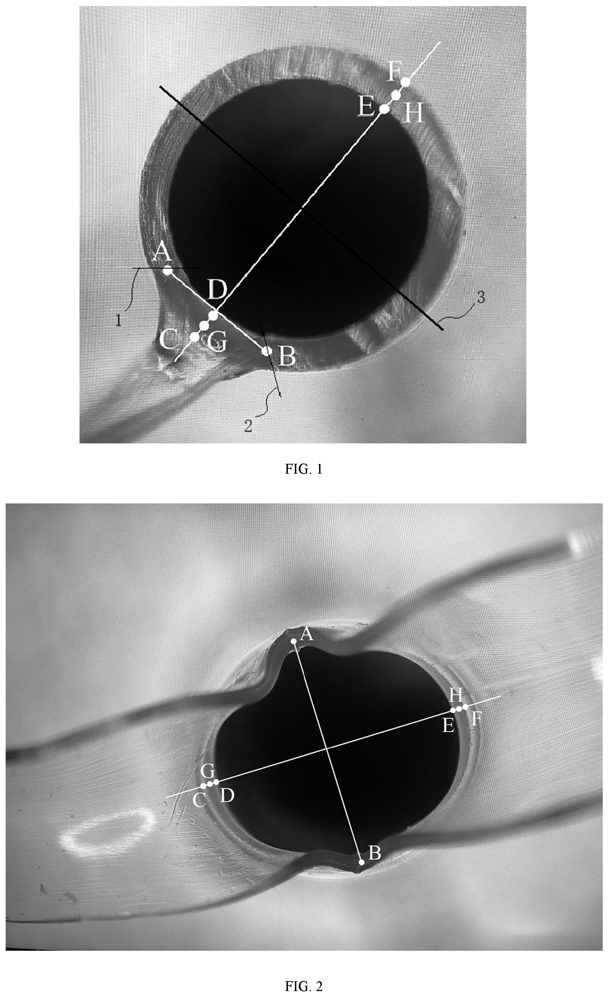

As shown in FIG. 1 which shows a schematic diagram of a cross section of a heat-shrinkable tube according to an embodiment at a notch starting position, reference numerals 1 and 2 are 2 notch positions corresponding to the notch starting position, and referring to FIG. 1, the notch starting position is away from a midline 3.

A and B are respectively midpoints of cutting marks of two notches on the cross section, the connecting line AB is called a notch connecting line, and a length thereof is denoted as l1; and
the midline 3 is a straight line passing through a center point of the cross section and parallel to a fracture connecting line (connecting line AB).
G and H are respectively midpoints of two line segments CD and EF respectively formed by intersecting a perpendicular bisector of a notch connecting line (connecting line AB) with two opposite side walls of the heat-shrinkable tube in the cross section, and a length of the connecting line GH is denoted as l₂ which is between an inner diameter and an outer diameter of the heat-shrinkable tube. It should be noted that the notch connecting line, the connecting line GH and the midline are mentioned for the same cross section.

A notch deviation rate of the notch starting position refers to a degree of deviation of the notch connecting line from the midline in the cross section, and reflects a relative positional relationship between the notch connecting line and the diameter parallel thereto and passing through the center point. According to the above calculation formula of the notch deviation rate of the notch starting position, when the notch connecting line is located on the diameter passing through the center point, AB is coincided with the straight line passing through the center point and parallel to AB, and the notch deviation rate is 0 in this case; when a distance between AB and the straight line is large (in a limiting case, A and B coincide), l₁ is 0, and the notch deviation rate is 1 in this case. In view of practical operations, the notch deviation rate is 0-50%, for example, 50% corresponds to the case that two torn parts have a mass ratio of 17:83, and 0% corresponds to the case that the two torn parts bisect a cross-sectional area.

As shown in FIG. 2 which shows tearing deviation of a heat-shrinkable tube according to an embodiment at a tear line, the heat-shrinkable tube is cut along a diameter direction, a fracture mark of a tearing opening is also in the diameter direction, a fracture connecting line is the line segment AB and is located in the diameter direction, and the tube is axially continuously torn into two parts throughout its length. It should be noted that since a pulling force is required to be applied to the two parts of the tube during tearing, a tear section appears to be oval, and the tube is actually circular.

A calculation formula of a crack deviation rate of the tear section is as follows:
crack deviation rate of tear section=(1-4L₁L₂/(d₁+D₁)²)×100%, which ranges from 0% to 50%.

Therefore, the heat-shrinkable tube according to the embodiment of the present application can realize a quite small or large crack deviation rate, and the crack deviation rate is variable between 0% and 50% along with a notch position.

Further, in the present application, the same heat-shrinkable tube is cut along the same notch starting position to produce a cross section of the notch starting position, and then, the tube is torn along a notch to form a tear section, and a cross section of the tear section is generated. Three cross sections perpendicular to an axial direction are taken at the tear section, a distance between every two adjacent cross sections of the three cross sections is more than or equal to 95mm, and further between 95mm and 105mm, an absolute value of a difference between an average value of crack deviation rates of the heat-shrinkable tube on the three cross sections and the notch deviation rate of the heat-shrinkable tube at the notch starting position is less than or equal to 15%, and a difference between a maximum value and a minimum value of the crack deviation rates on the three cross sections is less than or equal to 5%. This indicates that a tear line of the heat-shrinkable tube at the notch position is deviated to a small extent from a midline and is substantially parallel to the axial direction of the tube.

A shrinkage ratio a of the heat-shrinkable tube is more than or equal to 1.6, for example, 1.6-2.6, wherein a=d₁/d₂, and a unit is 1; d₁ is an initial inner diameter (an inner diameter before heat shrinkage) of the heat-shrinkable tube, and d₂ is an inner diameter of the heat-shrinkable tube after heat shrinkage under the condition of heating at 210°C for 10min. Optionally, the shrinkage ratio a of the heat-shrinkable tube is 1.6-2.6. Further, a=1.8-2.6.

A tearing force value b of the heat-shrinkable tube is less than 13.5N/mm, wherein b=Fₘₐₓ/d₃, Fₘₐₓ is a maximum tearing force value during tearing of the heat-shrinkable tube at a speed of 200mm/min, and d₃ is a wall thickness of the heat-shrinkable tube (an initial wall thickness of the heat-shrinkable tube). Optionally, b<12N/mm.

An embodiment of the present application provides a preparation method for a heat-shrinkable tube, including the following steps S10-S20.

S10: performing melt blending on raw materials, and performing extrusion molding at a traction speed of 0.25-10m/min to obtain a fluoroplastic tube.

The raw materials include first fluororesin and second fluororesin, each of the first fluororesin and the second fluororesin comprises at least two comonomers, the first fluororesin and the second fluororesin contain at least one identical comonomer, and the comonomers contained in the first fluororesin are not exactly the same as the comonomers contained in the second fluororesin. It is understood that the raw materials may optionally further include other plastics, and in a specific example, the raw materials are composed of the first fluororesin and the second fluororesin.

The inventor found through research that in order to realize tearability of the heat-shrinkable tube and variability of a crack deviation rate along with a notch position, a large number of phase interfaces continuously extending along a direction parallel to an axial direction of the tube are required to be formed in the prepared fluoroplastic tube on a micro level. In the present application, in the step S10, fluororesin particles form the large number of phase interfaces with different directions on the micro level due to melt blending, and the phase interfaces are uniformly oriented to be parallel to the axial direction of the tube and continuously extend due to an axial traction force having the specific traction speed during extrusion molding. These phase interfaces extending along the axial direction of the tube are similar to cutting marks, such that a crack generated when the prepared heat-shrinkable tube is torn can extend along these phase interfaces extending along the axial direction of the tube, and therefore, the tube can be continuously torn into two parts along the axial direction without deviation. Therefore, the heat-shrinkable tube according to the embodiment of the present application can easily achieve a tearing effect without forming the cutting marks in a surface of the tube in advance. It may be understood by those skilled in the art that the cutting marks may be formed in the outer surface of the heat-shrinkable tube in advance according to requirements of a user.

Further, the traction speed during extrusion molding is controlled to be 0.25-10m/min, and may be, for example, 0.25m/min, 0.5m/min, 0.7m/min, 1m/min, 1.2m/min, 1.5m/min, 1.8m/min, 2m/min, 2.1m/min, 3m/min, 3.5m/min, 3.7m/min, 4m/min, 5m/min, 6m/min, 6.4m/min, 6.5m/min, 7m/min, 8m/min, 10m/min, or a range formed by any two point values, further 0.5-7m/min or 0.7-6.4m/min, and further 1-4m/min. If the traction speed is excessively high, the generated micro phase interfaces are discontinuous; if the traction speed is excessively low, the generated phase interfaces can not achieve the effect of being parallel to the axial direction.

The inventor found through further research that in order to allow the large number of phase interfaces with different directions to be present on the micro level in the fluororesin particles after melt blending, two types of fluororesin particles that are not completely identical need to be used before blending. However, if the two fluororesin particles have an excessively large difference, even if the phase interfaces are formed in the blending step, the unstable phase interfaces are easily damaged in the extrusion molding step, such that the prepared fluoroplastic tube are layered or cracked, and radial expansion cannot be performed to obtain the heat-shrinkable tube. Therefore, in order to form the stable phase interfaces in the fluororesin particles after blending on the micro level, although the two fluororesin particles before blending cannot be completely identical, they still need to have certain similarity. For this purpose, the heat-shrinkable tube according to the embodiment of the present application includes the following raw materials.

Requirements in terms of chemical components: each of the first fluororesin and the second fluororesin comprises at least two comonomers, the first fluororesin and the second fluororesin contain at least one identical comonomer, and the comonomers contained in the first fluororesin are not exactly the same as the comonomers contained in the second fluororesin. It is understood that each of the first fluororesin and the second fluororesin is a fluorine-containing copolymer. Therefore, the heat-shrinkable tube is a fluoroplastic heat-shrinkable tube.

Further, the comonomers of each of the first fluororesin and the second fluororesin independently include at least two of ethylene, vinylidene fluoride, tetrafluoroethylene, perfluoroalkoxy-substituted tetrafluoroethylene, and hexafluoropropylene.

Further, the first fluororesin is a tetrafluoroethylene-hexafluoropropylene copolymer, and the second fluororesin is an ethylene-tetrafluoroethylene copolymer; alternatively, the first fluororesin is a tetrafluoroethylene-hexafluoropropylene-perfluoroalkoxy-substituted tetrafluoroethylene copolymer, and the second fluororesin is a tetrafluoroethylene-hexafluoropropylene-vinylidene fluoride copolymer.

Requirements in terms of molecular weight distribution: in a processing environment of melt blending, viscosities of the fluororesin particles of the first fluororesin and the second fluororesin before blending in a molten state are x and y respectively, x>y, units of x and y are the same, for example, Pa·s, and then, the two fluororesin particles before blending need to satisfy 1>y/x>0.1. The inventor believed that the viscosity is a manifestation of molecular weight distribution of a polymeric material, and if the viscosities of the two fluororesin particles before blending are greatly different, a difference in molecular weight distribution between the first fluororesin and the second fluororesin is not favorable for formation of the stable phase interfaces in the blending step.

Further, it is assumed that a measured viscosity after melt blending of the first fluororesin and the second fluororesin is z, a theoretical viscosity is z₀, and units of z and z₀ are the same as those of x and y, for example, Pa·s. Parameters such as a temperature and shear used in the melt blending step in the step S10 also affect stability of the phase interfaces existing on the micro level in the fluororesin particles after blending. The stability of the phase interface can also be judged by a difference between the theoretical value z₀ and the measured value z of the viscosity of the fluororesin blend after blending. In some examples, the temperature of the melt blending step in the step S10 is 270-380°C, and the shear rate is 1-10s⁻¹.

If the two kinds of fluororesin before blending are extremely similar, the theoretical value z₀ of the viscosity of the fluororesin blend after blending should be a weighted average of the viscosities x and y of the two kinds of fluororesin before blending with respect to respective mass contents. That is, if the mass contents of the first fluororesin and the second fluororesin before blending in a total amount of the first fluororesin and the second fluororesin are m and n respectively, m+n =1, both m and n are not 0, m is the mass content of the first fluororesin in a total mass of the blend composed of the first fluororesin and the second fluororesin, and n is the mass content of the second fluororesin in the total mass of the blend composed of the first fluororesin and the second fluororesin, the theoretical value z₀ of the viscosity of the fluororesin blend after blending is mx+ny in the processing environment of melt blending in the step S10. Further, m ranges from 2% to 98%.

If a relationship between the measured viscosity value z and the theoretical viscosity value z₀ of the fluororesin particles after blending satisfies 0.5<z/z₀<3 in the processing environment of melt blending in the step S10, it is considered that in the blended fluororesin blend, the phase interfaces existing on the micro level are relatively stable. The stability of the phase interface determines a shrinkage ratio of the subsequently obtained heat-shrinkable tube. The more stable the phase interface is, the stronger the mechanical properties of the heat-shrinkable tube are, the larger the provided shrinkage force is, and the larger the shrinkage ratio is.

Meanwhile, since a propagation path of the crack needs to follow the phase interfaces when the heat-shrinkable tube is torn, the more stable the phase interface is, the worse the tearing performance is, and the larger the required tearing force is. In order to avoid that the required tearing force is excessively large, and thus, the heat-shrinkable tube loses tearability, the phase interfaces cannot be excessively stable, and therefore, the difference between the theoretical value and the measured value of the viscosity of the fluororesin particles needs to be kept away from a range for which the theoretical value and the measured value are close, i.e., the range of 0.9≤z/z₀≤1.2. Thus, the first fluororesin and the second fluororesin satisfy: 0.5<z/(mx+ny)<0.9 or 1.2<z/(mx+ny)<3, and since z₀=mx+ny, the condition is simplified as: 0.5<z/z₀<0.9 or 1.2<z/z₀<3.0.

S20: heating the fluoroplastic tube to be in a high elastic state, radially expanding the fluoroplastic tube, and then performing cooling and molding to obtain the heat-shrinkable tube.

It is understood that a heating temperature required for the high elastic state is above a glass-transition temperature of the fluoroplastic tube and below a melting point of the fluoroplastic tube.

In the preparation method according to the present application, by optimizing the comonomers and the viscosities of the raw materials in the step S10, the large number of phase interfaces with different directions exist on the micro level in the fluororesin blend after melt blending of the raw materials; then, the fluororesin blend after melt blending is subjected to the traction force during extrusion molding at the traction speed of 0.25-10m/min, such that the directions of the phase interfaces are unified to be the axial direction of the tube; and then, the heat-shrinkable tube is obtained through the step S20, in which the heat-shrinkable tube is radially expanded under the condition of being heated to be in the high elastic state, and the heat-shrinkable tube to which a load is applied is obtained.

On the micro level, the phase interfaces extending in the axial direction of the tube and formed in the step S10 function like the cutting marks, such that the crack generated when the prepared heat-shrinkable tube is torn can easily propagate along the phase interfaces extending in the axial direction of the tube, and therefore, the heat-shrinkable tube can be easily torn into two parts continuously in the axial direction; in addition, a tear position of the prepared heat-shrinkable tube can be changed randomly along with the notch position. Specifically, as mentioned above, the heat-shrinkable tube torn at different notches has at least two different crack deviation rates at the tear section, and the crack deviation rate of the tear section ranges from 0% to 50%; for two heat-shrinkable tubes, when the difference of the notch deviation rates of the two heat-shrinkable tubes is about 40%, for example, 39-41%, after the two heat-shrinkable tubes are torn along the two notch starting positions, the difference of the crack deviation rates of the two heat-shrinkable tubes is 30-50%. Therefore, the requirement of different crack deviation rates can be met, requirements in various usage scenarios can be met, and the crack deviation rate facilitating operations can be selected as required for tearing of any notch position of one end of the heat-shrinkable tube.

Further, the heat-shrinkable tube prepared with the above preparation method has a larger shrinkage ratio and a smaller tearing force required during tearing, such that the heat-shrinkable tube generates a stronger covering force and protection force for a covered member, and an improvement of simplicity and convenience of the tearing operation of the heat-shrinkable tube is facilitated.

In some embodiments, in the step S10, the first fluororesin and the second fluororesin satisfy 1>y/x>0.5 and 0.7<z/z₀<0.9. Within this range, the shrinkage ratio of the obtained heat-shrinkable tube can be further increased.

If the shrinkage ratio of the obtained heat-shrinkable tube is required to be further increased, compositions and molecular weights of the first fluororesin and the second fluororesin need to be optimized, and an extrusion molding process needs to be improved. This is because, in order to further increase the shrinkage ratio of the heat-shrinkable tube obtained after the radial expansion in the step S20, the fluoroplastic tube obtained by the extrusion molding in the step S10 needs to have good toughness, so as to be radially expanded to a sufficient extent without cracking, and finally, the obtained heat-shrinkable tube can have a high shrinkage ratio.

The larger the crystallinity of the fluoroplastic tube obtained in the step S10, the stronger the capability to withstand radial expansion in the step S20. An important factor affecting the crystallinity of the extruded fluoroplastic tube is a rate of lowering of the temperature of the molten fluororesin with time during the molding process from extrusion to cooling to the glass-transition temperature, and particularly a maximum value of the rate of lowering of the temperature of the molten fluororesin with the time during this process.

In some embodiments, in the extrusion molding step of the step S10, the maximum value of the temperature lowering rate of the molten fluororesin in the molding process from extrusion to cooling to the glass-transition temperature is controlled to be lower than 300°C/s, may be, for example, 280°C/s, 250°C/s, 220°C/s, 200°C/s, 180°C/s, 150°C/s, 145°C/s, 135°C/s, 120°C/s, or 100°C/s, and may also be a range formed by any two point values, for example, <280°C/s, <250°C/s, <200°C/s, or 100-280°C/s.

The inventor found through research that if the maximum value of the temperature lowering rate of the molten fluororesin in the molding process from extrusion to cooling to the glass-transition temperature is too large, which indicates that the fluororesin is rapidly cooled, when the fluororesin is rapidly cooled from the molten state to the crystalline state or semi-crystalline state, numerous small crystal grains are formed on the micro level, such that the fluoroplastic tube is brittle, which is not favorable for the radial expansion in the step S20. If the rate of lowering of the temperature with the time is not large throughout the cooling process, which indicates that the fluororesin is slowly cooled, when the fluororesin is slowly cooled from the molten state to the crystalline state or semi-crystalline state, few large crystal grains are formed on the micro level, such that the fluoroplastic tube is slightly tough, which is conducive to radially expanding the fluoroplastic tube to a sufficient extent without cracking in the step S20, and finally, the obtained heat-shrinkable tube has a high shrinkage ratio.

Between the steps S10 and S20, the method further includes the following step: cooling the tube obtained by extrusion molding. In the step of cooling the tube obtained by extrusion molding to be at a temperature below the glass-transition temperature, the temperature lowering rate of the tube in the molding process from extrusion to cooling to the glass-transition temperature is controlled to be 6-300°C/s or 6-150°C/s, such that the shrinkage ratio a of the prepared heat-shrinkable tube can be 2.5, and the tearing force value b can be below 12.0N/mm. If the temperature lowering rate is too low, an efficiency is reduced; and if the temperature lowering rate is too high, a shape of the obtained tube is poor, for example, is not a circular straight cylinder shape.

Further, in order to stabilize a wall thickness of the extruded fluoroplastic tube, a ratio of an inner diameter of a radial-expansion extrusion die to an outer diameter of the cooled and shaped fluoroplastic tube (i.e., an outer diameter of the fluoroplastic tube obtained in the step S10, or an outer diameter of the tube before radial expansion) needs to satisfy requirements. Otherwise, if the wall thickness of the extruded fluoroplastic tube fluctuates greatly, when the tube is radially expanded in the step S20, a position with a smallest wall thickness is susceptible to stress failure, resulting in a tube rupture. In the step S10, the ratio of the inner diameter of the extrusion die to the outer diameter of the cooled and shaped fluoroplastic tube (i.e., the outer diameter of the fluoroplastic tube obtained in the step S10, or the outer diameter of the tube before radial expansion) is an important factor for determining the stability of the wall thickness of the fluoroplastic tube. Generally, in the step S10, the inner diameter of the extrusion die is larger than the outer diameter of the cooled and shaped fluoroplastic tube, that is, a radial sectional area of the molten fluororesin leaving the extrusion die is larger than a radial sectional area of the cooled and shaped fluoroplastic tube, and the larger the difference between the radial sectional areas, the larger the axial traction degree of the fluororesin during cooling. However, such axial traction may aggravate the fluctuation of the wall thickness of the fluoroplastic tube, and therefore, in order to control the stability of the wall thickness of the fluoroplastic tube extruded in the step S10, so as not to cause frequent breakage of the tube in the step S20, the ratio of the inner diameter of the extrusion die to the outer diameter of the cooled and shaped fluoroplastic tube in the step S10 is controlled to be not more than 10.

On the other hand, the ratio of the inner diameter of the extrusion die to the outer diameter of the cooled and shaped fluoroplastic tube in the step S10 cannot be excessively small, otherwise, if the radial sectional area of the molten fluororesin leaving the extrusion die is excessively small, a volume of the molten fluororesin flowing through the die in unit time is excessively small, which results in an excessively small melt pressure of the molten fluororesin near the extrusion die, and the excessively small melt pressure cannot ensure stability of the volume of the molten fluororesin flowing through the die in unit time, thereby aggravating the fluctuation of the wall thickness of the fluoroplastic tube. Therefore, in order to control the stability of the wall thickness of the fluoroplastic tube extruded in the step S10, so as not to cause frequent breakage of the tube in the step S20, the ratio of the inner diameter of the extrusion die to the outer diameter of the cooled and shaped fluoroplastic tube in the step S10 is also required to be not less than 1.5.

In summary, in some embodiments, in the extrusion molding step of the step S10, the inner diameter of the extrusion die adopted in the extrusion step is d₄, the outer diameter of the prepared fluoroplastic tube is d₅, and the ratio d₄/d₅ of the inner diameter of the extrusion die to the outer diameter of the cooled and shaped fluoroplastic tube is controlled to be 1.5-10. The fluoroplastic tube is the tube before radial expansion.

As an example, the ratio d₄/d₅ of the inner diameter of the extrusion die to the outer diameter of the cooled and shaped fluoroplastic tube can be 2, 3, 3.5, 4, 4.5, 5, 5.5, 6, 6.5, 7, 8 or 10. Further, d₄/d₅ is 2-8, 2-7, 2.5-8, 2.5-7, 3-7, 3-6, or 4-5.

In some embodiments, in the step S20, a mold for controlling radial expansion of the fluoroplastic tube (i.e., a diameter control mold) is generally in direct contact with the fluoroplastic tube. Therefore, it is believed by the general knowledge in the art that when the expansion method employed in the step S20 is used, the fluoroplastic tube and the diameter control mold are usually prevented from moving relative to each other as much as possible, so as to prevent the expanded fluoroplastic tube from being cracked due to a frictional stress applied thereto by the diameter control mold.

However, if the above-mentioned preparation method according to the present application is employed, by selecting the fluororesin as the raw materials, controlling the similarity of the two fluororesin particles before blending and the stability of the phase interfaces existing on the micro level in the fluororesin particles after blending, controlling the temperature lowering rate of the molten fluororesin in the process from extrusion to cooling to the temperature below the glass-transition temperature to be 6-300°C/S, and preferably 10-150°C/S, and controlling the ratio d₄/d₅ of the inner diameter of the extrusion die to the outer diameter of the cooled fluoroplastic tube to be 1.5-10, and preferably 2-8, so as to ensure the stability of the wall thickness of the extruded fluoroplastic tube, the fluoroplastic tube prepared in the step S10 can have high mechanical strength, such that even if the expansion method adopted in the step S20 causes relative movement between the fluoroplastic tube and the diameter control mold, the expanded fluoroplastic tube cannot be easily cracked due to the frictional stress applied by the diameter control mold to the fluoroplastic tube.

It should be noted that since compared to an expansion method requiring the fluoroplastic tube and the diameter control mold to be stationary relative to each other, the expansion method allowing the fluoroplastic tube and the diameter control mold to move relative to each other can generally save a lot of processing time and material loss, if the fluoroplastic tube extruded in the step S10 is allowed to move relative to the diameter control mold during the radial expansion in the step S20, considerable economic benefits may be provided.

In the radial expansion process, the tube and the diameter control mold move at the same time under the action of the traction force. As mentioned above, the tube is cooled after extrusion, and then heated to be in the high elastic state in the diameter control mold before radial expansion, and the traction force is applied while the pressure difference is exerted between the interior and the exterior of the tube, such that the phase interfaces are still parallel to the axial direction of the tube, and influences of heating of the tube and the applied load are avoided. A traction speed in the radial expansion step is lower than that in the extrusion step, for example, the traction speed in the radial expansion step is 0.05-8.5m/min.

In some embodiments, in the step S20, an expansion ratio c of the radial expansion is calculated by d₁/d₆ and is 1.65-2.75, d₁ is the inner diameter of the finally prepared heat-shrinkable tube, i.e., the heat-shrinkable tube after the radial expansion, and d₆ is the inner diameter of the fluoroplastic tube obtained by extrusion molding, i.e., the tube before the radial expansion.

In order to make the objects, technical solutions and advantages of the present application more concise and clearer, the present application is described with reference to the following specific examples, but the present application is by no means limited to these examples. The following examples are described as preferred examples of the present application, can be used to describe the present application, and should not be construed as limiting the scope of the present application. It should be noted that any modifications, equivalents and improvements made within the spirit and principle of the present application should be included in the protection scope of the present application.

In order to better illustrate the present application, the content of the present application is further described below in conjunction with examples. Specific examples are described below.

### Example 1

a) Two types of fluororesin particles were subjected to melt blending to obtain blended fluororesin particles.
b) The blended fluororesin particles were molten, extruded at a traction speed of 3.7m/min, cooled and molded to obtain a fluoroplastic tube.
c) The fluoroplastic tube after extrusion molding was heated to be at a temperature above a glass-transition temperature and below a melting point of the fluoroplastic tube to realize a high elastic state, the tube was radially expanded by a diameter control mold under a traction force, and the tube was rapidly cooled into a glass state under the condition of keeping radial expansion for cooling and molding, so as to obtain a heat-shrinkable tube.

In the step a), the two fluororesin particles before blending were a (tetrafluoroethylene-hexafluoropropylene-perfluoroalkoxy-substituted tetrafluoroethylene) copolymer C-960 produced by Chemours and a (tetrafluoroethylene-hexafluoropropylene-vinylidene fluoride) copolymer 815GZ produced by 3M respectively.

Under a processing environment of the step a), measured viscosities and a theoretical viscosity of the two fluororesin particles (the copolymer C-960 and the copolymer 815GZ) before blending and the fluororesin blend after blending of the two fluororesin particles (the copolymers) were respectively x, y, z and z₀, and units were Pa·s (x>y).

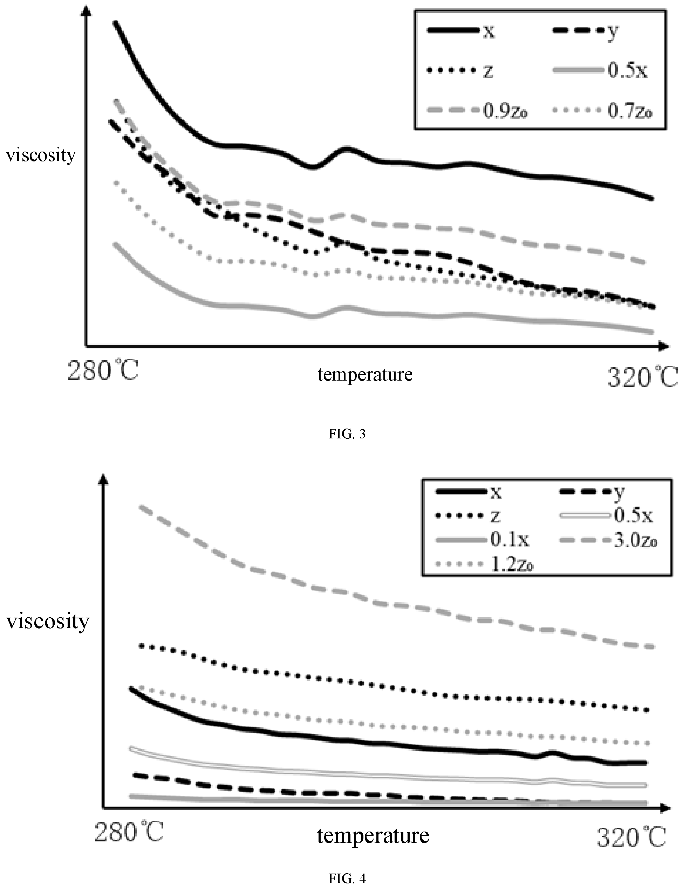

Mass fractions of the copolymer C-960 and the copolymer 815GZ in the two types of fluororesin before blending were m and n (m+n=1); viscosities x, y, z, 0.5x, 0.7z₀ and 0.9z₀ obtained from testing were plotted against the temperature, a result was shown in FIG. 3 (the abscissa temperature range was 280-320 °C), and x, y, z, z₀, m and n satisfied 1>y/x>0.5 and 0.7<z/z₀<0.9, wherein z₀=mx+ny.

In the step b), in the molding process of the molten fluororesin from leaving from an extruder head to cooling to a temperature below a glass-transition temperature, a maximum value of a temperature lowering rate of the fluororesin was 135°C/s, and a ratio of an inner diameter of an extrusion die to an outer diameter of the fluoroplastic tube prepared after cooling and shaping was d₄/d₅=5.

In the step c), the fluoroplastic tube and a diameter control mold moved relatively at a traction speed of 1m/min in the radial expansion process to obtain the heat-shrinkable tube with a length of 2m. An expansion ratio c of the radial expansion was 2.74.

The measured viscosities of the two fluororesin particles (the copolymer C-960 and the copolymer 815GZ) before blending and the fluororesin blend after blending of the two fluororesin particles (the copolymers) were obtained by testing at a melting temperature of 270-380°C and a shear rate of 1s⁻¹.

Herein, the viscosity was tested as follows: reference was made to 4. Rotation Method in GB/T 10247-2008, a single rotation motor test mode of a rotational rheometer with the model MCR 702e MultiDrive from Anton Paar was used, the shear rate was set to 1s⁻¹, and a set temperature was 270°C and was increased to 380°C at a ramp rate of 2°C/min.

Only curves with the temperature range of 280-320°C were shown in FIG. 3 to FIG. 6.

In addition, it should be noted that viscosities of non-Newtonian fluids are generally measured by the rotational rheometer by using a characterization method in standards such as GB/T 6538-2022, but such a test method usually has limitations on the test temperature and the shear rate, for example, GB/T 6538-2022 limits the temperature to be -10-35°C and is not suitable for the requirement for the melting temperature of 270-380°C. Due to the lack of viscosity test standards for non-Newtonian fluids which can be applied to the test temperature of the present application, the standard GB/T 10247-2008 (the specific test method is described above) applied to viscosity measurement of Newtonian fluids is introduced in the present application, and although there are certain differences between tested x, y and z and the theoretical real viscosity, since the test methods of the viscosities in the present solution are consistent, that is, test dimensions are uniform, and the first fluororesin and the second fluororesin are defined based on the ratios of y/x and z/z₀ in the present application, the implementation of the technical solution of the present application is not affected.

### Example 2

Example 2 was basically the same as Example 1, except that: in the step b), in the molding process of the molten fluororesin from leaving from the extruder head to cooling to the glass-transition temperature, the maximum value of the temperature lowering rate of the fluororesin was 280°C/s; and in the step c), the expansion ratio c of the radial expansion was 2.06.

### Example 3

Example 3 was basically the same as Example 1, except that: in the step b), the ratio d₄/d₅ of the inner diameter of the extrusion die to the outer diameter of the fluoroplastic tube prepared after cooling and shaping was 1.8, and the extrusion traction speed was 0.7m/min.

The result showed that in the step c), the traction speed was 0, that is, the heat-shrinkable tube could be obtained by performing expansion only under the condition that the fluoroplastic tube and the diameter control mold were relatively stationary; and the expansion ratio c of the radial expansion was 2.72.

### Example 4

Example 4 was basically the same as Example 1, except that: in the step b), the ratio d₄/d₅ of the inner diameter of the extrusion die to the outer diameter of the fluoroplastic tube prepared after cooling and shaping was 8.3, and the extrusion traction speed was 6.4m/min.

The result showed that in the step c), the heat-shrinkable tube could be obtained only by using the expansion method in which the fluoroplastic tube and the diameter control mold were relatively stationary; and the expansion ratio c of the radial expansion was 2.74.

### Example 5

Example 5 was basically the same as Example 1, except that:
in the step a), the two fluororesin particles before blending were respectively a (tetrafluoroethylene-hexafluoropropylene) copolymer 100 produced by Chemours and a (ethylene-tetrafluoroethylene) copolymer EP-541 produced by Daikin, and the extrusion traction speed was 1.8m/min.

As shown in FIG. 4 (the abscissa temperature range was 280-320°C), x, y, z, m and n did not satisfy y/x>0.5 or 0.7<z/z₀<0.9, but satisfied y/x>0.1 and 1.2<z/z₀<3.0, wherein z₀=mx+ny.

In the step b), in the molding process of the molten fluororesin from leaving from the extruder head to cooling to the glass-transition temperature, the maximum value of the temperature lowering rate of the fluororesin was 145°C/s, and the ratio of the inner diameter of the extrusion die to the outer diameter of the fluoroplastic tube prepared after cooling and shaping was d₄/d₅=4.5.

The result showed that in the step c), the fluoroplastic tube could move relative to the diameter control mold in the expansion process; and the expansion ratio c of the radial expansion was 2.32.

### Example 6

Example 6 was basically the same as Example 1, except that: in the step b), the extrusion traction speed after the blended fluororesin particles were molten was different, and specifically, the traction speed was 3.0m/min; and in the step c), the expansion ratio c of the radial expansion was 2.71.

### Example 7

Example 7 was basically the same as Example 1, except that: in the step b), the extrusion traction speed after the blended fluororesin particles were molten was different, and specifically, the traction speed was 2.1m/min; and in the step c), the expansion ratio c of the radial expansion was 2.74.

### Example 8

Example 8 was basically the same as Example 1, except that: in the step b), the extrusion traction speed after the blended fluororesin particles were molten was different, and specifically, the traction speed was 1.2m/min; and in the step c), the expansion ratio c of the radial expansion was 2.75.

### Example 9

Example 9 was basically the same as Example 1, except that: in the step b), the extrusion traction speed after the blended fluororesin particles were molten was different, and specifically, the traction speed was 6.0m/min; and in the step c), the expansion ratio c of the radial expansion was 2.73.

### Comparative Example 1

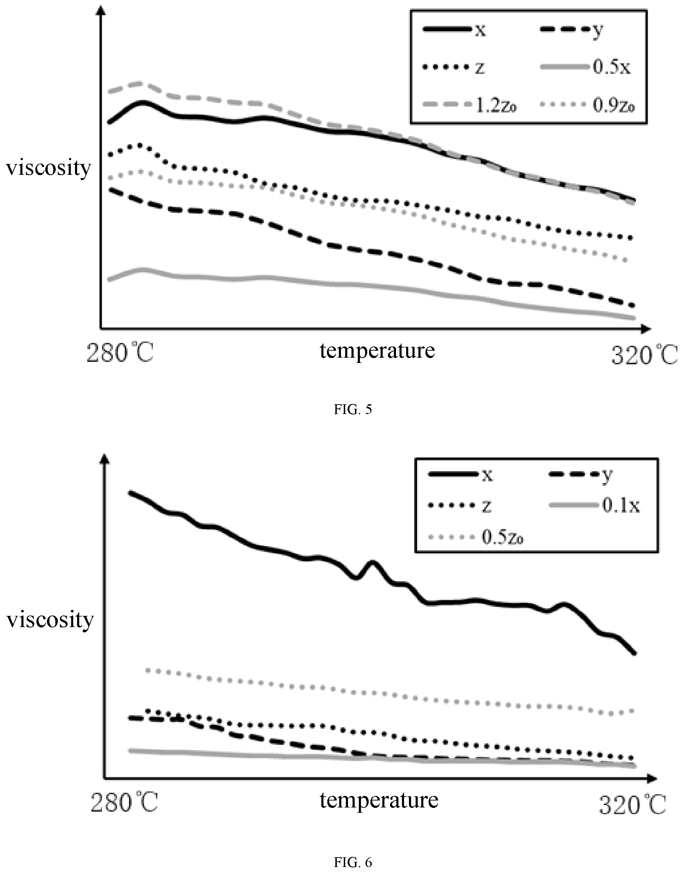

Comparative Example 1 was basically the same as Example 1, except that:
the extrusion traction speed was 4.1m/min, and by adjusting m and n, x, y, z, m and n satisfied 1>y/x>0.5 and 0.9<z/z₀<1.2, wherein z₀=mx+ny, as shown in FIG. 5 (the abscissa temperature range was 280-320°C).

The result showed that the fluoroplastic tube could move relative to the diameter control mold during expansion in the step c), and an average value of the shrinkage ratio of the obtained heat-shrinkable tube was 2.56. However, the obtained heat-shrinkable tube had a continuous tearing length less than 2cm and hardly had tearability.

### Comparative Example 2

Comparative Example 2 was basically the same as Example 5, except that:
the extrusion traction speed was 2.0m/min, and by adjusting m and n, x, y, z, m and n satisfied 1>y/x>0.1 and z/z₀<0.5, wherein z₀=mx+ny, as shown in FIG. 6.

The result showed that in the step c), the heat-shrinkable tube could be obtained only by using the expansion method in which the fluoroplastic tube and the diameter control mold were relatively stationary, the average value of the shrinkage ratio of the obtained heat-shrinkable tube was 1.08, and an average value of the tearing force value was 1.9N/mm.

Herein, the shrinkage ratio a of the heat-shrinkable tube was calculated by d₁/d₂ and had a unit of 1; and d₁ was the inner diameter of the heat-shrinkable tube before heat shrinkage, and d₂ was the inner diameter of the heat-shrinkable tube after heat shrinkage under the condition of heating at 210°C for 10min.

The tearing force value b of the heat-shrinkable tube was calculated by Fₘₐₓ/d₃ and had a unit of N/mm, Fₘₐₓ was a maximum tearing force value during tearing of the heat-shrinkable tube at a speed of 200mm/min, and d₃ was a wall thickness of the heat-shrinkable tube.

The heat-shrinkable tubes obtained in the examples and comparative examples were subjected to a heat shrinkage test under the condition of heating at 210°C for 10min; and the heat-shrinkable tubes were subjected to 5 tear tests, obtained data was shown in tables 1 to 10 below, and the shrinkage ratios a and the tearing force values b were averaged and recorded in table 11.

The tear test of the heat-shrinkable tube was as follows: two openings of about 1cm were cut at one end of the heat-shrinkable tube along an axial direction of the tube, two parts of the tube formed by the two openings were held with two hands to tear the tube, and if the tube could be continuously torn into two parts along the axial direction, and a continuous tearing length was more than 1 meter, the tube was considered to have tearability, the maximum tearing force value Fₘₐₓ in the tearing process was recorded, and the tearing force value b=Fₘₐₓ/d₃ was obtained according to the wall thickness of the heat-shrinkable tube. If the continuous tearing length was less than 1 meter, the tube was considered to have no tearability, and the heat-shrinkable tube according to the present application could be continuously torn by more than 2 meters, and even more than 3 meters.

**Table 1**

| Example 1 | Inner diameter d₁ before heat shrinkage (mm) | Inner diameter d₂ after heat shrinkage (mm) | Wall thickness after heat shrinkage (mm) | Shrinkage ratio a | Tearing force value b |
|---|---|---|---|---|---|
| 1 | 1.54 | 0.61 | 0.30 | 2.52 | 11.9 |
| 2 | 1.53 | 0.61 | 0.31 | 2.51 | 11.7 |
| 3 | 1.60 | 0.64 | 0.30 | 2.50 | 11.0 |
| 4 | 1.48 | 0.59 | 0.30 | 2.51 | 11.9 |
| 5 | 1.55 | 0.62 | 0.31 | 2.50 | 11.5 |

**Table 2**

| Example 2 | Inner diameter d₁ before heat shrinkage (mm) | Inner diameter d₂ after heat shrinkage (mm) | Wall thickness after heat shrinkage (mm) | Shrinkage ratio a | Tearing force value b |
|---|---|---|---|---|---|
| 1 | 1.16 | 0.63 | 0.32 | 1.84 | 11.9 |
| 2 | 1.13 | 0.61 | 0.31 | 1.85 | 11.7 |
| 3 | 1.13 | 0.60 | 0.31 | 1.88 | 11.0 |
| 4 | 1.07 | 0.59 | 0.31 | 1.81 | 11.9 |
| 5 | 1.16 | 0.64 | 0.30 | 1.81 | 11.5 |

**Table 3**

| Example 3 | Inner diameter d₁ before heat shrinkage (mm) | Inner diameter d₂ after heat shrinkage (mm) | Wall thickness after heat shrinkage (mm) | Shrinkage ratio a | Tearing force value b |
|---|---|---|---|---|---|
| 1 | 1.58 | 0.62 | 0.32 | 2.55 | 11.0 |
| 2 | 1.59 | 0.63 | 0.34 | 2.52 | 10.9 |
| 3 | 1.56 | 0.61 | 0.31 | 2.56 | 11.8 |
| 4 | 1.53 | 0.60 | 0.31 | 2.55 | 11.6 |
| 5 | 1.58 | 0.63 | 0.33 | 2.51 | 11.6 |

**Table 4**

| Example 4 | Inner diameter d₁ before heat shrinkage (mm) | Inner diameter d₂ after heat shrinkage (mm) | Wall thickness after heat shrinkage (mm) | Shrinkage ratio a | Tearing force value b |
|---|---|---|---|---|---|
| 1 | 1.50 | 0.59 | 0.34 | 2.54 | 12.1 |
| 2 | 1.51 | 0.59 | 0.33 | 2.56 | 12.2 |
| 3 | 1.59 | 0.63 | 0.31 | 2.52 | 11.4 |
| 4 | 1.58 | 0.63 | 0.30 | 2.51 | 12.1 |
| 5 | 1.57 | 0.62 | 0.31 | 2.53 | 11.4 |

**Table 5**

| Example 5 | Inner diameter d₁ before heat shrinkage (mm) | Inner diameter d₂ after heat shrinkage (mm) | Wall thickness after heat shrinkage (mm) | Shrinkage ratio a | Tearing force value b |
|---|---|---|---|---|---|
| 1 | 0.86 | 0.42 | 0.31 | 2.05 | 10.1 |
| 2 | 0.83 | 0.41 | 0.31 | 2.02 | 9.3 |
| 3 | 0.86 | 0.42 | 0.32 | 2.05 | 9.6 |
| 4 | 0.91 | 0.42 | 0.31 | 2.17 | 10.4 |
| 5 | 0.93 | 0.45 | 0.30 | 2.07 | 9.2 |

**Table 6**

| Example 6 | Inner diameter d₁ before heat shrinkage (mm) | Inner diameter d₂ after heat shrinkage (mm) | Wall thickness after heat shrinkage (mm) | Shrinkage ratio a | Tearing force value b |
|---|---|---|---|---|---|
| 1 | 1.51 | 0.60 | 0.30 | 2.52 | 11.9 |
| 2 | 1.54 | 0.60 | 0.30 | 2.57 | 11.4 |
| 3 | 1.52 | 0.59 | 0.31 | 2.58 | 11.0 |
| 4 | 1.53 | 0.61 | 0.30 | 2.51 | 11.7 |
| 5 | 1.51 | 0.60 | 0.30 | 2.52 | 11.5 |

**Table 7**

| Example 7 | Inner diameter d₁ before heat shrinkage (mm) | Inner diameter d₂ after heat shrinkage (mm) | Wall thickness after heat shrinkage (mm) | Shrinkage ratio a | Tearing force value b |
|---|---|---|---|---|---|
| 1 | 1.52 | 0.60 | 0.30 | 2.53 | 11.7 |
| 2 | 1.53 | 0.61 | 0.29 | 2.51 | 11.2 |
| 3 | 1.51 | 0.60 | 0.29 | 2.52 | 10.9 |
| 4 | 1.50 | 0.60 | 0.31 | 2.50 | 11.8 |
| 5 | 1.51 | 0.60 | 0.30 | 2.52 | 11.4 |

**Table 8**

| Example 8 | Inner diameter d₁ before heat shrinkage (mm) | Inner diameter d₂ after heat shrinkage (mm) | Wall thickness after heat shrinkage (mm) | Shrinkage ratio a | Tearing force value b |
|---|---|---|---|---|---|
| 1 | 1.50 | 0.59 | 0.31 | 2.54 | 11.3 |
| 2 | 1.52 | 0.60 | 0.29 | 2.53 | 11.7 |
| 3 | 1.55 | 0.60 | 0.29 | 2.58 | 11.8 |
| 4 | 1.54 | 0.61 | 0.29 | 2.52 | 11.8 |
| 5 | 1.52 | 0.60 | 0.29 | 2.53 | 11.9 |

**Table 9**

| Example 9 | Inner diameter d₁ before heat shrinkage (mm) | Inner diameter d₂ after heat shrinkage (mm) | Wall thickness after heat shrinkage (mm) | Shrinkage ratio a | Tearing force value b |
|---|---|---|---|---|---|
| 1 | 1.54 | 0.60 | 0.30 | 2.57 | 11.1 |
| 2 | 1.53 | 0.60 | 0.30 | 2.55 | 11.2 |
| 3 | 1.50 | 0.59 | 0.30 | 2.54 | 11.5 |
| 4 | 1.51 | 0.60 | 0.31 | 2.52 | 11.2 |
| 5 | 1.51 | 0.61 | 0.29 | 2.48 | 11.0 |

**Table 10**

| Comparative Example 1 | Inner diameter d₁ before heat shrinkage (mm) | Inner diameter d₂ after heat shrinkage (mm) | Wall thickness after heat shrinkage (mm) | Shrinkage ratio a | Tearing force value b |
|---|---|---|---|---|---|
| 1 | 1.60 | 0.62 | 0.31 | 2.58 | No tearability |
| 2 | 1.54 | 0.61 | 0.31 | 2.52 | No tearability |
| 3 | 1.59 | 0.62 | 0.32 | 2.56 | No tearability |
| 4 | 1.60 | 0.63 | 0.31 | 2.54 | No tearability |
| 5 | 1.55 | 0.60 | 0.30 | 2.58 | No tearability |

**Table 11**

| Comparative Example 2 | Inner diameter d₁ before heat shrinkage (mm) | Inner diameter d₂ after heat shrinkage (mm) | Wall thickness after heat shrinkage (mm) | Shrinkage ratio a | Tearing force value b |
|---|---|---|---|---|---|
| 1 | 0.44 | 0.40 | 0.31 | 1.10 | 2.4 |
| 2 | 0.41 | 0.39 | 0.31 | 1.05 | 2.1 |
| 3 | 0.44 | 0.40 | 0.32 | 1.10 | 1.5 |
| 4 | 0.44 | 0.40 | 0.31 | 1.10 | 1.4 |
| 5 | 0.42 | 0.40 | 0.30 | 1.05 | 2.0 |

Some preparation parameters of the examples and comparative examples and the average values of the shrinkage ratios and the tearing force values of the heat-shrinkable tubes were shown in Table 12.

**Table 12**

| Group | Step a) | | | Step b) | | | Step c) | Heat-shrinkable tube | | | | | |
|---|---|---|---|---|---|---|---|---|---|---|---|---|---|
| | Raw material | y/x | z/z 0 | Maximum value of temperature lowering rate (°C/s) | d₄/ d₅ | Extrusion traction speed m/min | Whether the tube and the mold can move relatively during expansion | A 1 | B 1 | A 2 | B 2 | Average value of shrink age ratios | Average value of tearing force values (N/mm) |
| Example 1 | C-960+ 815G Z | >0. 5, <1 | >0. 7 <0. 9 | 135 | 5.0 | 3.7 | Yes | 4 0 | 3 3 | 1 | 3 | 2.51 | 11.6 |
| Example 2 | C-960+ 815G Z | >0. 5, <1 | >0. 7 <0. 9 | 280 | 5.0 | 3.7 | Yes | 4 0 | 4 8 | 1 | 4 | 1.84 | 11.3 |
| Example 3 | C-960+ 815G Z | >0. 5, <1 | >0. 7 <0. 9 | 135 | 1.8 | 0.7 | No | 4 0 | 4 6 | 1 | 4 | 2.54 | 11.4 |
| Example 4 | C-960+ 815G Z | >0. 5, <1 | >0. 7 <0. 9 | 135 | 8.3 | 6.4 | No | 4 0 | 3 2 | 1 | 2 | 2.53 | 11.8 |
| Example 5 | 100+ EP54 1 | >0. 1 <0. 5 | >1. 2 <3. 0 | 145 | 4.5 | 1.8 | Yes | 4 0 | 4 9 | 1 | 7 | 2.07 | 9.7 |
| Example 6 | C-960+ 815G Z | >0. 5, <1 | >0. 7 <0. 9 | 135 | 5.0 | 3.0 | Yes | 4 0 | 3 3 | 1 | 2 | 2.53 | 11.5 |
| Example 7 | C-960+ 815G Z | >0. 5, <1 | >0. 7 <0. 9 | 135 | 5.0 | 2.1 | Yes | 4 0 | 4 6 | 1 | 4 | 2.51 | 11.4 |
| Example 8 | C-960+ 815G Z | >0. 5, <1 | >0. 7 <0. 9 | 135 | 5.0 | 1.2 | Yes | 4 0 | 3 4 | 1 | 2 | 2.54 | 11.7 |
| Example 9 | C-960+ 815G Z | >0. 5, <1 | >0. 7 <0. 9 | 135 | 5.0 | 6.0 | Yes | 4 0 | 4 4 | 1 | 3 | 2.53 | 11.2 |
| Comparative Example 1 | C-960+ 815G Z | >0. 5, <1 | >0. 9 <1. 2 | 135 | 5.0 | 4.1 | Yes | / | / | / | / | 2.56 | No tearability |
| Comparative Example 2 | 100+ EP54 1 | >0. 1 <0. 5 | <0. 5 | 145 | 4.5 | 2.0 | No | 4 0 | 4 1 | 1 | 1 | 1.08 | 1.9 |

Whether the tube and the mold can move relatively during expansion is determined by judging whether a heat-shrinkable tube which can be continuously torn by a length more than or equal to 1m without breakage can be prepared under the condition that the tube and the mold move relatively during expansion. If the heat-shrinkable tube which can be continuously torn by a length more than or equal to 1m without breakage can be prepared under the condition that the tube and the mold move relatively during expansion, the tube and the mold can move relatively during expansion; if the heat-shrinkable tube which can be continuously torn by a length more than or equal to 1m without breakage cannot be prepared under the condition that the tube and the mold move relatively during expansion, for example, the continuous tearing length of the prepared heat-shrinkable tube is less than 1m, the tube and the mold cannot move relatively during expansion, that is, the relative movement is not recommended during production.

A1 and B1 are the crack deviation rate of the tear section at the notch position and the notch deviation rate of the notch starting position shown in FIG. 1 respectively. A2 and B2 are the crack deviation rate of the tear section at the notch position and the notch deviation rate of the notch starting position shown in FIG. 2 respectively.

As is apparent from the above tables, Comparative Example 1 is different from Example 1 only in the range of z/z₀, specifically, 0.9<z/z₀<1.2, and the result shows that the heat-shrinkable tube obtained in Comparative Example 1 has a larger shrinkage ratio, but as described above, the continuous tearing length of the obtained heat-shrinkable tube is less than 2cm, and the obtained heat-shrinkable tube hardly has tearability.

Comparative Example 2 is different from Example 5 mainly in the range of z/z₀, specifically, z/z₀<0.5, and the result shows that the heat-shrinkable tube obtained in Comparative Example 2 has tearability and a small tearing force value, but the shrinkage ratio thereof is quite small, and the tube hardly has heat shrinkability.

The heat-shrinkable tubes prepared in the examples of the present application have both large shrinkage ratios and good tearability, and the tearing lengths can be 2-3m.

As is apparent from comparison of Example 1 and Example 2, the shrinkage ratio of the obtained heat-shrinkable tube can be further improved by further controlling the maximum value of the temperature lowering rate of the molten fluororesin in the molding process from extrusion to cooling to the glass-transition temperature to be less than 280°C/s on the basis of Example 2.

As is apparent from comparison of Example 1, Example 3 and Example 4, on the basis of Example 3 and Example 4, by further controlling the ratio d₄/d₅ of the inner diameter of the extrusion die to the outer diameter of the cooled and shaped fluoroplastic tube to be greater than 1.8 and less than 8.3, the fluoroplastic tube and the diameter control mold can be allowed to move relatively during radial expansion, and meanwhile, the obtained heat-shrinkable tube has a good shrinkage ratio and tearability.

As is apparent from comparison of Example 1 and Example 6 to Example 9, on the basis of Example 1, under the condition that the ratio d₄/d₅ of the inner diameter of the extrusion die to the outer diameter of the cooled and shaped fluoroplastic tube, and the maximum value of the temperature lowering rate of the molten fluororesin in the molding process from extrusion to cooling to the glass-transition temperature are kept unchanged, and only the traction speed is changed, the shrinkage ratios and the tearability of the prepared heat shrinkable tubes are not greatly different. However, when the traction speed is in the preferable range of 1-4m/min (as in Example 1 and Example 6 to Example 8), the difference between the maximum value and the minimum value of the crack deviation rates on the three cross sections (any two adjacent cross sections of the three cross sections have an axial distance of 100mm) of the tear section of the prepared heat-shrinkable tube is less than or equal to 5%; when the traction speed is out of the preferable range of 1-4m/min (as in Example 9), the difference between the maximum value and the minimum value of the crack deviation rates on the three cross sections of the tear section of the prepared heat-shrinkable tube is greater than 5%. This means that by further optimizing the traction speed, the phase interfaces can be further facilitated to be uniformly oriented to be parallel to the axial direction of the tube and continuously extend, such that the prepared heat-shrinkable tube is less likely to deviate from the axial direction when being torn, and an increase of the tearable length is facilitated.

The technical features in the above embodiments may be combined arbitrarily. For concise description, not all possible combinations of the technical features in the above embodiments are described. However, provided that they do not conflict with each other, all combinations of the technical features are to be considered to be within the scope of protection of the present application.

The above-mentioned embodiments only describe several implementations of the present application, and their description is specific and detailed, but should not be understood as a limitation on the protection scope of the present application. It should be noted that, for a person of ordinary skill in the art, various variations and improvements can be further made without departing from the conception of the present application, and these all fall within the protection scope of the present application. Therefore, the protection scope of the present application should be subject to the appended claims, and the description and drawings can be used to explain the scope of the claims.

## Claims

1. A heat-shrinkable tube, wherein components of the heat-shrinkable tube comprise first fluororesin and second fluororesin, each of the first fluororesin and the second fluororesin comprises at least two comonomers, the first fluororesin and the second fluororesin contain at least one identical comonomer, and the comonomers contained in the first fluororesin are not exactly the same as the comonomers contained in the second fluororesin;
an absolute value of a difference between a notch deviation rate of the heat-shrinkable tube at a notch starting position and a crack deviation rate of a tear section of the heat-shrinkable tube at the notch position is less than or equal to 15%; and
at two different notch positions, when a difference between notch deviation rates of the heat-shrinkable tube at two notch starting positions is 39-41%, a difference between crack deviation rates of tear sections of the heat-shrinkable tube at the two notch positions is 30-50%.

2. The heat-shrinkable tube according to claim 1, wherein under the same notch position, three cross sections perpendicular to the axial direction are taken at the tear section of the heat-shrinkable tube, an axial distance between any two adjacent cross sections of the three cross sections is more than or equal to 95mm, an absolute value of a difference between an average value of crack deviation rates of the heat-shrinkable tube on the three cross sections and the notch deviation rate of the heat-shrinkable tube at the notch starting position is less than or equal to 15%, and a difference between a maximum value and a minimum value of the crack deviation rates on the three cross sections is less than or equal to 5%.

3. The heat-shrinkable tube according to claim 1 or 2,
wherein the crack deviation rate of the tear section refers to a position deviation degree of a fracture connecting line on any cross section of the tear section of the heat-shrinkable tube perpendicular to the axial direction relative to a midline; the fracture connecting line refers to a connecting line of two midpoints of two fracture marks on the cross section, and the midline refers to a straight line which passes through a center point of the cross section and is parallel to the fracture connecting line;
the crack deviation rate of the tear section is calculated by (1-4L₁L₂/(d₁+D₁)²)×100%, and ranges from 0% to 50%;
L₁ denotes a length of the fracture connecting line;
L₂ denotes a length of a connecting line of two midpoints of two line segments respectively formed by intersecting a perpendicular bisector of the fracture connecting line with two opposite side walls of the heat-shrinkable tube in the cross section;
d₁ denotes an initial inner diameter of the heat-shrinkable tube; and
D₁ denotes an initial outer diameter of the heat-shrinkable tube.

4. The heat-shrinkable tube according to any one of claims 1 to 3, wherein the notch deviation rate at the notch starting position refers to a position deviation degree of a notch connecting line on a cross section of the notch starting position of the heat-shrinkable tube perpendicular to the axial direction relative to a midline; the notch connecting line refers to a connecting line of two midpoints of two cutting marks, and the midline refers to a straight line which passes through a center point of the cross section and is parallel to the notch connecting line;
the notch deviation rate at the notch starting position is calculated by (1-4l₁l₂/(d₁+D₁)²)×100%, and ranges from 0% to 50%;
l₁ denotes a length of the notch connecting line;
l₂ denotes a length of a connecting line of two midpoints of two line segments respectively formed by intersecting a perpendicular bisector of the notch connecting line with the two opposite side walls of the heat-shrinkable tube in the cross section;
d₁ denotes an initial inner diameter of the heat-shrinkable tube; and
D₁ denotes an initial outer diameter of the heat-shrinkable tube.

5. The heat-shrinkable tube according to any one of claims 1 to 4, wherein the heat-shrinkable tube has at least one of the following features:
(1) a shrinkage ratio a of the heat-shrinkable tube is more than or equal to 1.6, and optionally, a is 1.6-2.6, wherein a=d₁/d₂, and a unit is 1; d₁ is an initial inner diameter of the heat-shrinkable tube, and d₂ is an inner diameter of the heat-shrinkable tube after heat shrinkage under the condition of heating at 210°C for 10min; and
(2) a tearing force value b of the heat-shrinkable tube is less than 13.5N/mm, wherein b=Fₘₐₓ/d₃, Fₘₐₓ is a maximum tearing force value during tearing of the heat-shrinkable tube at a speed of 200mm/min, and d₃ is a wall thickness of the heat-shrinkable tube.

6. The heat-shrinkable tube according to any one of claims 1 to 5, wherein the first fluororesin and the second fluororesin have the following features:
viscosities of the first fluororesin and the second fluororesin in a molten state are x and y respectively; a measured value of a viscosity after melt blending of the first fluororesin and the second fluororesin is z, and a theoretical value thereof is z₀; z, z₀, x and y have a same unit; mass contents of the first fluororesin and the second fluororesin before blending in a total amount of the first fluororesin and the second fluororesin are m and n respectively, m+n=1, both m and n are not 0, and z₀=mx+ny;
1>y/x>0.1; 0.5<z/z₀<0.9, or 1.2<z/z₀<3.0.

7. The heat-shrinkable tube according to claim 6, wherein 1>y/x>0.5, and 0.7<z/z₀<0.9.

8. The heat-shrinkable tube according to any one of claims 1 to 7, wherein the comonomers of each of the first fluororesin and the second fluororesin independently comprise at least two of ethylene, vinylidene fluoride, tetrafluoroethylene, perfluoroalkoxy-substituted tetrafluoroethylene, and hexafluoropropylene.

9. The heat-shrinkable tube according to claim 8, wherein the first fluororesin is a tetrafluoroethylene-hexafluoropropylene copolymer, and the second fluororesin is an ethylene-tetrafluoroethylene copolymer.

10. The heat-shrinkable tube according to claim 8, wherein the first fluororesin is a tetrafluoroethylene-hexafluoropropylene-perfluoroalkoxy-substituted tetrafluoroethylene copolymer, and the second fluororesin is a tetrafluoroethylene-hexafluoropropylene-vinylidene fluoride copolymer.

11. A preparation method for a heat-shrinkable tube, comprising the following steps:
performing melt blending on raw materials, and performing extrusion molding at a traction speed of 0.25-10m/min to obtain a fluoroplastic tube, wherein the raw materials comprise first fluororesin and second fluororesin, each of the first fluororesin and the second fluororesin comprises at least two comonomers, the first fluororesin and the second fluororesin contain at least one identical comonomer, and the comonomers contained in the first fluororesin are not exactly the same as the comonomers contained in the second fluororesin; viscosities of the first fluororesin and the second fluororesin in a molten state are x and y respectively, a measured viscosity after melt blending of the first fluororesin and the second fluororesin is z, a theoretical viscosity is z₀, x, y, z and z₀ have a same unit, z₀=mx+ny, 1>y/x>0.1, 0.5<z/z₀<0.9 or 1.2<z/z₀<3.0, mass contents of the first fluororesin and the second fluororesin before blending in a total amount of the first fluororesin and the second fluororesin are m and n respectively, m+n=1, and both m and n are not 0; and
heating the fluoroplastic tube to be in a high elastic state, radially expanding the fluoroplastic tube, and then performing cooling and molding to obtain the heat-shrinkable tube.

12. The preparation method according to claim 11, wherein 1>y/x>0.5, and 0.7<z/z₀<0.9.

13. The preparation method according to claim 11 or 12, wherein the extrusion molding step has at least one of the following features:
(1) the traction speed of the extrusion molding step is 1-4m/min;
(2) a temperature of the melt blending is 270-380°C, and a shear rate thereof is 1-10s⁻¹; and
(3) in the extrusion molding step, an inner diameter of an adopted extrusion die is d₄, an outer diameter of the prepared fluoroplastic tube is d₅, and d₄/d₅ is controlled to be 1.5-10 or 2-8.

14. The preparation method according to any one of claims 11 to 13, after the extrusion molding step, further comprising the step of cooling the fluoroplastic tube obtained by extrusion molding to be at a temperature below a glass-transition temperature, in which a temperature lowering rate is 6-300°C/s.

15. The preparation method according to claim 14, wherein the temperature lowering rate is 10-150°C/s.

16. The preparation method according to any one of claims 11 to 15, wherein the radial expansion step has at least one of the following features:
(1) a traction force is applied while radial expansion is performed, a traction speed in the radial expansion step is lower than that in the extrusion molding step, and optionally, the traction speed in the radial expansion step is 0.05-8.5m/min; and
(2) an expansion ratio c of the radial expansion is calculated by d₁/d₆ and is 1.65-2.75, d₁ is an inner diameter of the prepared heat-shrinkable tube, and d₆ is an inner diameter of the heat-shrinkable tube before the radial expansion and after the extrusion molding.
